(19) **Europäisches Patentamt / European Patent Office / Office européen des brevets**

(11) **EP 3 122 049 A1**

(12) # EUROPEAN PATENT APPLICATION
published in accordance with Art. 153(4) EPC

(43) Date of publication:
**25.01.2017 Bulletin 2017/04**

(21) Application number: **15764564.9**

(22) Date of filing: **04.02.2015**

(51) Int Cl.:
**H04N 19/426** *(2014.01)*   **H04N 19/126** *(2014.01)*
**H04N 19/196** *(2014.01)*

(86) International application number:
**PCT/JP2015/000487**

(87) International publication number:
**WO 2015/141116 (24.09.2015 Gazette 2015/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **19.03.2014 JP 2014055841**

(71) Applicant: **NEC Corporation**
**Tokyo 108-8001 (JP)**

(72) Inventors:
• **NAGAYAMA, Suguru**
  **Tokyo 108-8001 (JP)**

• **CHONO, Keiichi**
  **Tokyo 108-8001 (JP)**
• **ISHIDA, Takayuki**
  **Tokyo 108-8001 (JP)**
• **TSUJI, Naoya**
  **Tokyo 108-8001 (JP)**
• **SHIMOFURE, Kensuke**
  **Tokyo 108-8001 (JP)**

(74) Representative: **Vossius & Partner**
**Patentanwälte Rechtsanwälte mbB**
**Siebertstrasse 3**
**81675 München (DE)**

(54) **IMAGE ENCODING APPARATUS, IMAGE ENCODING METHOD, AND IMAGE ENCODING PROGRAM**

(57)    A video encoding device includes control means 12 for supplying parameters used in the quantization process to the quantizing means 11, wherein the quantizing means 11 includes: a two-dimensional table 13 storing result values of calculation which is a part of the quantization process, each of the result values is calculated by using a value based on a quantization parameter and a quantization weighting coefficient used for visual image quality control; and computing means 14 for inputting a result value corresponding to two parameters supplied from the control means 12, and generating the quantization coefficient by using the input result value.

## FIG. 6

EP 3 122 049 A1

**Description**

FIELD OF THE INVENTION

The present invention relates to a video encoding device to which a technique of distributing the computational load of a video encoding process is applied.

BACKGROUND OF THE INVENTION

In the video coding scheme based on Non Patent Literature (NPL) 1, each frame of digitized video is split into coding tree units (CTUs), and each CTU is encoded in raster scan order. Each CTU is split into coding units (CUs) and encoded, in a quadtree structure. Each CU is split into prediction units (PUs) and predicted. The prediction error of each CU is split into transform units (TUs) and frequency-transformed, in a quadtree structure. Hereafter, a CU of the largest size is referred to as "largest CU" (largest coding unit: LCU), and a CU of the smallest size is referred to as "smallest CU" (smallest coding unit: SCU). The LCU size and the CTU size are the same.

Each CU is prediction-encoded by intra prediction or inter-frame prediction. The following describes intra prediction and inter-frame prediction.

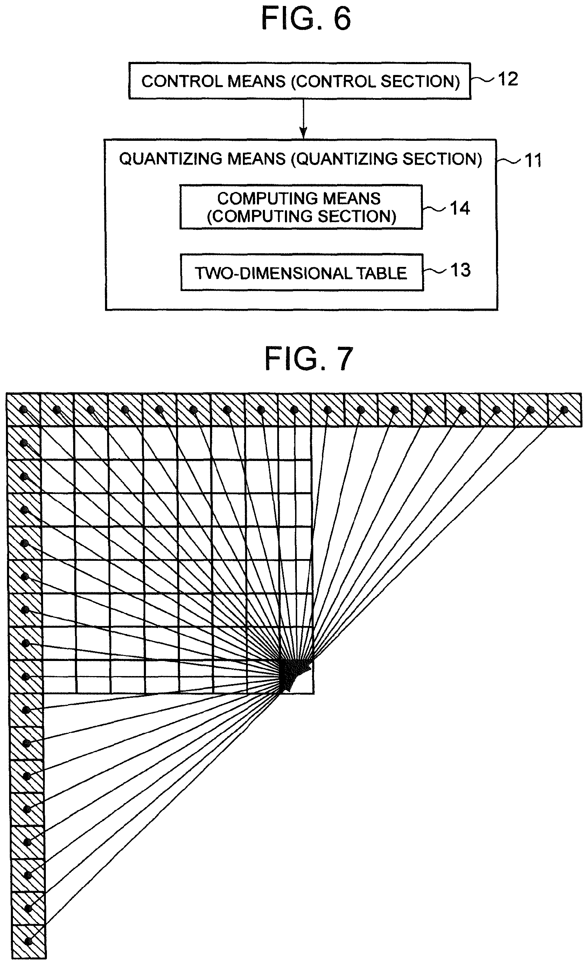

Intra prediction is prediction for generating a prediction image from a reconstructed image of a frame to be encoded. NPL 1 defines 33 types of angular intra prediction depicted in Fig. 7. In angular intra prediction, a reconstructed pixel near a block to be encoded is used for extrapolation in any of 33 directions depicted in Fig. 7, to generate an intra prediction signal.

In addition to 33 types of angular intra prediction, NPL 1 defines DC intra prediction for averaging reconstructed pixels near the block to be encoded, and planar intra prediction for linear interpolating reconstructed pixels near the block to be encoded. A CU encoded based on intra prediction is hereafter referred to as "intra CU".

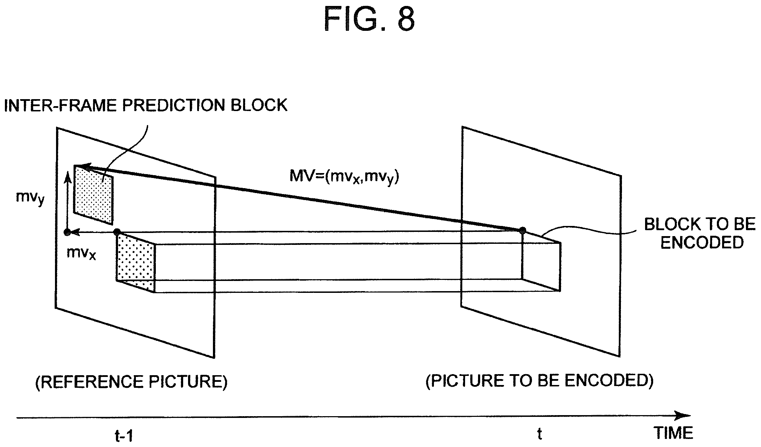

Inter-frame prediction is prediction based on an image of a reconstructed frame (reference picture) different in display time from a frame to be encoded. Inter-frame prediction is hereafter also referred to as "inter prediction". Fig. 8 is an explanatory diagram depicting an example of inter-frame prediction. A motion vector MV = $(mv_x, mvy)$ indicates the amount of translation of a reconstructed image block of a reference picture relative to a block to be encoded. In inter prediction, an inter prediction signal is generated based on a reconstructed image block of a reference picture (using pixel interpolation if necessary). A CU encoded based on inter-frame prediction is hereafter referred to as "inter CU".

Whether a CU is an intra CU or an inter CU is signaled by pred_mode_flag syntax described in NPL 1.

A frame encoded including only intra CUs is called "I frame" (or "I picture"). A frame encoded including not only intra CUs but also inter CUs is called "P frame" (or "P picture"). A frame encoded including inter CUs that each use not only one reference picture but two reference pictures simultaneously for the inter prediction of the block is called "B frame" (or "B picture").

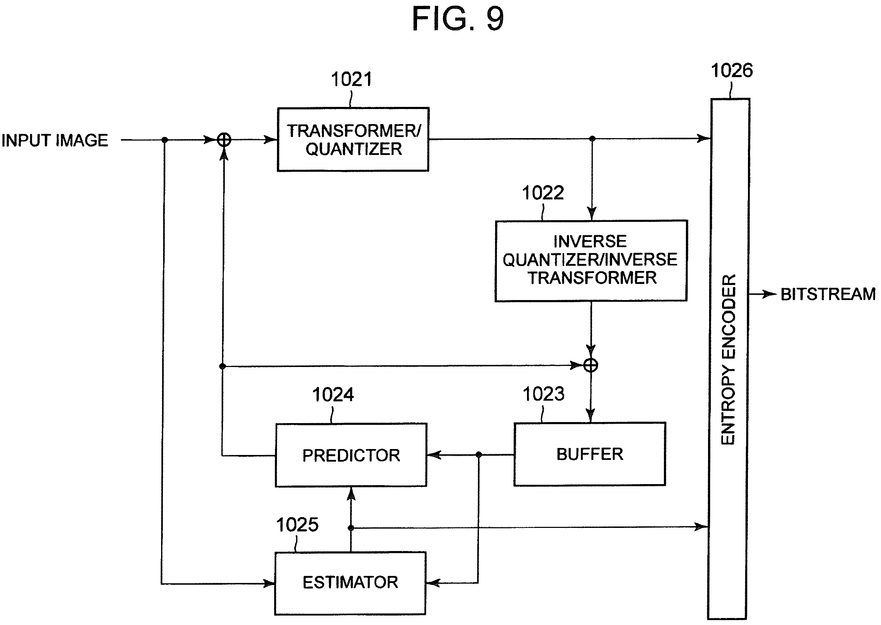

The following describes the structure and operation of a typical video encoding device that receives each CU of each frame of digitized video as an input image and outputs a bitstream, with reference to Fig. 9.

A video encoding device depicted in Fig. 9 includes a transformer/quantizer 1021, an entropy encoder 1026, an inverse quantizer/inverse transformer 1022, a buffer 1023, a predictor 1024, and an estimator 1025.

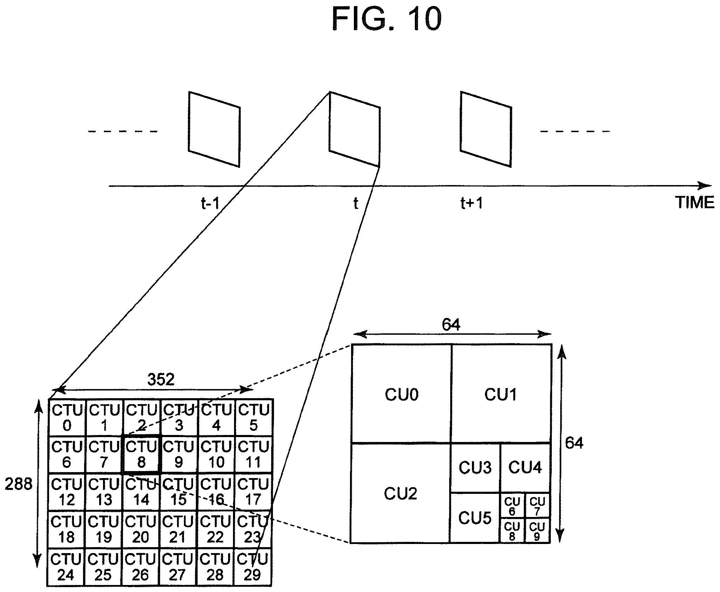

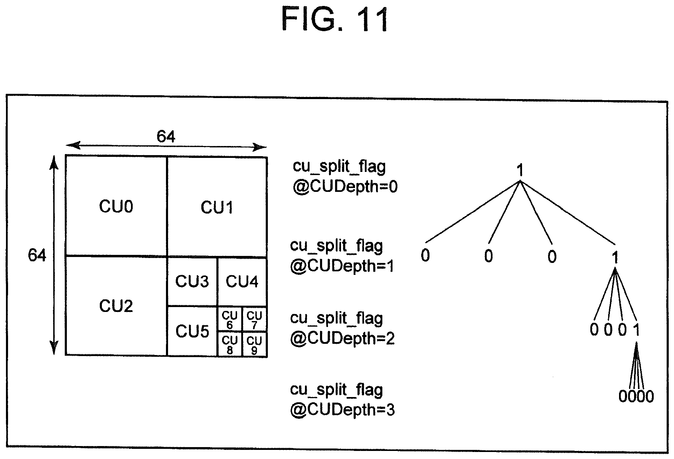

Fig. 10 is an explanatory diagram depicting an example of CTU partitioning of a frame t and an example of CU partitioning of the eighth CTU (CTU8) included in the frame t, in the case where the spatial resolution of the frame is the common intermediate format (CIF) and the CTU size is 64. Fig. 11 is an explanatory diagram depicting a quadtree structure corresponding to the example of CU partitioning of CTU8. The quadtree structure, i.e. the CU partitioning shape, of each CTU is signaled by split_cu_flag syntax described in NPL 1.

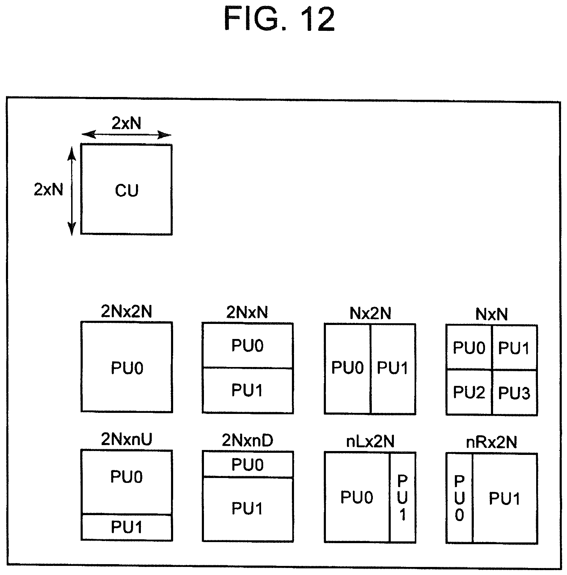

Fig. 12 is an explanatory diagram depicting PU partitioning shapes of a CU. In the case where the CU is an intra CU, square PU partitioning is selectable. In the case where the CU is an inter CU, not only square but also rectangular PU partitioning is selectable. The PU partitioning shape of each CU is signaled by part_mode syntax described in NPL 1.

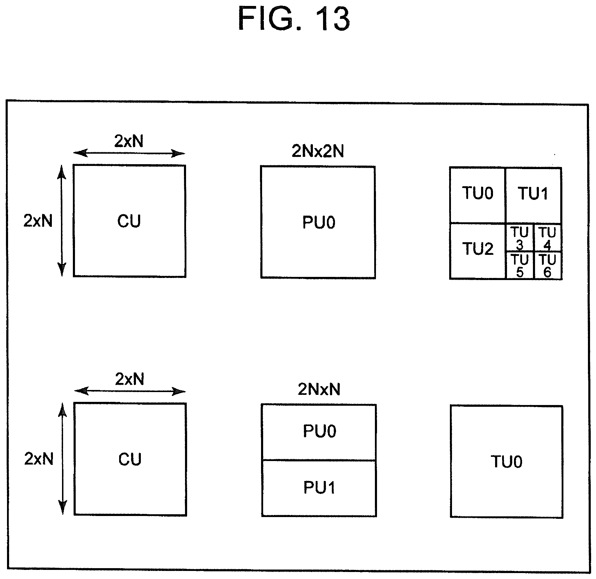

Fig. 13 is an explanatory diagram depicting examples of TU partitioning of a CU. An example of TU partitioning of an intra CU having a 2Nx2N PU partitioning shape is depicted in the upper part of the drawing. In the case where the CU is an intra CU, the root of the quadtree is located in the PU, and the prediction error of each PU is expressed by the quadtree structure. An example of TU partitioning of an inter CU having a 2NxN PU partitioning shape is depicted in the lower part of the drawing. In the case where the CU is an inter CU, the root of the quadtree is located in the CU, and the prediction error of the CU is expressed by the quadtree structure. The quadtree structure of the prediction error, i.e. the TU partitioning shape of each CU, is signaled by split_tu_flag syntax described in NPL 1.

The estimator 1025 determines, for each CTU, a split_cu_flag syntax value for determining a CU partitioning shape that minimizes the coding cost. The estimator 1025 determines, for each CU, a pred_mode_flag syntax value for determining intra prediction/inter prediction, a part_mode syntax value for determining a PU partitioning shape, and a split_tu_flag syntax value for determining a TU partitioning shape that minimize the coding cost. The estimator 1025 determines, for each PU, an intra prediction direction, a motion vector, etc. that minimize the coding cost.

The transformer/quantizer 1021 frequency-transforms a prediction error image obtained by subtracting the prediction signal from the input image signal, based on the TU partitioning shape determined by the estimator 1025.

The transformer/quantizer 1021 further quantizes the frequency-transformed prediction error image (frequency transform coefficient). The frequency transform coefficient is hereafter referred to as a transform coefficient and the quantized transform coefficient is referred to as a quantization coefficient.

The entropy encoder 1026 entropy-encodes the split_cu_flag syntax value, the pred_mode_flag syntax value, the part_mode syntax value, the split_tu_flag syntax value, the difference information of the intra prediction direction, and the difference information of the motion vector determined by the estimator 1025, and the transform quantization value.

The inverse quantizer/inverse transformer 1022 inverse-quantizes the transform quantization value. The inverse quantizer/inverse transformer 1022 further inverse-frequency-transforms the frequency transform coefficient obtained by the inverse quantization. The prediction signal is added to the reconstructed prediction error image obtained by the inverse frequency transform, and the result is supplied to the buffer 1023. The buffer 1023 stores the reconstructed image.

The typical video encoding device generates a bitstream based on the operation described above.

Citation List

Patent Literatures

   PTL 1: Japanese Patent Application Laid-Open No. 2011-109711
   PTL 2: Japanese Patent Application Laid-Open No. 2013-150327

Non Patent Literatures

   NPL 1: ITU-T recommendation H.265 High efficiency video coding, April 2013
   NPL 2: ITU-T H.264 2011/06

SUMMARY OF THE INVENTION

In the H.264/AVC standard described in NPL 2, two kinds, i.e., $4 \times 4$ and $8 \times 8$, are used as block sizes for transform (orthogonal transform). On the other hand, in the H.265/HEVC standard described in NPL 1, four kinds, i.e., $4 \times 4$, $8 \times 8$, $16 \times 16$, and $32 \times 32$, are used as block sizes (TU sizes) for orthogonal transform.

An arithmetic expression for obtaining a quantization coefficient $q_{ij}$ of a transform coefficient $c_{ij}$ is shown in Equation (1).

[Math. 1]

$$q_{ij} = \left( \frac{\text{Qscale}(\text{Qp\%6})}{m_{ij}} \left| c_{ij} \right| + f \cdot q_{step} \right) / q_{step} \quad (1)$$

$$f = \frac{\text{offsetQ}}{512}$$

$$q_{step} = 1 \ll (25 + \lfloor Qp/6 \rfloor - \text{BitDepth} - \log_2 N)$$

f denotes an offset for determining quantization rounding. OffsetQ is a value (quantization offset) depending on a slice type (slice_type) based on an HM (HEVC test Model). $q_{step}$ denotes a quantization step size. "<<" indicates shift to the left. BitDepth denotes the pixel bit depth of an input image. N denotes the TU size.

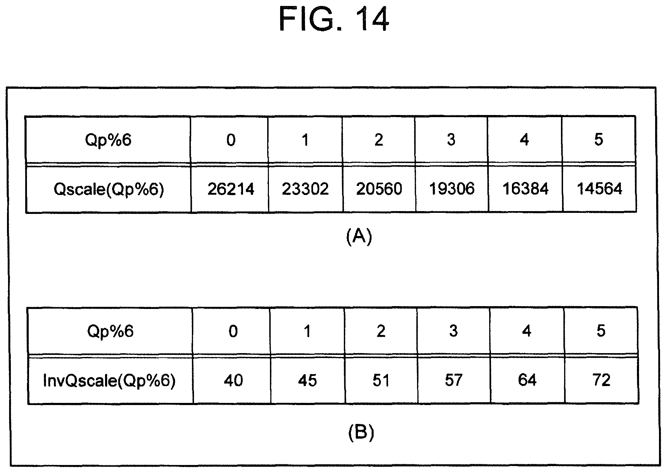

Qscale denotes a quantization step coefficient, which is a multiplication coefficient for achieving quantization with the quantization step size $q_{step}$. Qp%6 denotes a remainder when a quantization parameter Qp is divided by 6. Qscale (Qp%6) means a value corresponding to the Qp%6 value as a remainder obtained when Qscale divides the quantization parameter Qp by 6. Hereinafter, Qscale (Qp%6) is called a quantization step coefficient according to Qp%6. $m_{ij}$ denotes a quantization weighting coefficient matrix (hereinafter referred to as a weighting coefficient) used for visual image quality control, and an element m of the matrix takes any one of values 1 to 255. Although an example of m = 16 is shown in (A) of FIG. 14, a value of the quantization step coefficient (Qscale (Qp%6)) according to Qp%6 is also determined in the case of m = 1 to 15, and 17 to 255.

Although the quantization step coefficient Qscale is not defined in the H.265/HEVC, an inverse quantization step coefficient InvQscale (see (B) in FIG. 14) is defined in the H.265/HEVC standard.

The quantization step coefficient Qscale needs to satisfy the following constraint (Equation (2)).

[Math. 2]

$$\frac{Qscale}{m_{ij}} = \frac{65536}{InvQscale} \qquad (2)$$

The maximum value of the quantization step coefficient Qscale is 419,430, which is represented by 19 bits.

The weighting coefficient ($m_{ij}$) varies according to each color component, each TU size of orthogonal transform, and the intra prediction/inter prediction.

When the transformer/quantizer 1021 calculates a quantization coefficient $q_{ij}$ for each pixel based on Equation (1) mentioned above, the computational amount increases. Particularly, since a division using the weighting coefficient ($m_{ij}$) as the divisor is included in Equation (1), the computational load increases. Therefore, such a configuration that a value configuring part of the right side of Equation (1) is stored in a memory as a look-up table (hereinafter referred to as a table or LUT) is generally considered to be adopted to obtain the quantization coefficient $q_{ij}$.

Since the weighting coefficient ($m_{ij}$) varies depending on each of the color components (luminance component Y, and U component and V component of a color difference signal), intra prediction/inter prediction, and each TU size of orthogonal transform, many tables need to be stored in the memory. Then, the number of bits of data that constitute each table is large.

Examples of using tables to obtain a quantization coefficient $q_{ij}$ are described in NPLs 1 and 2.

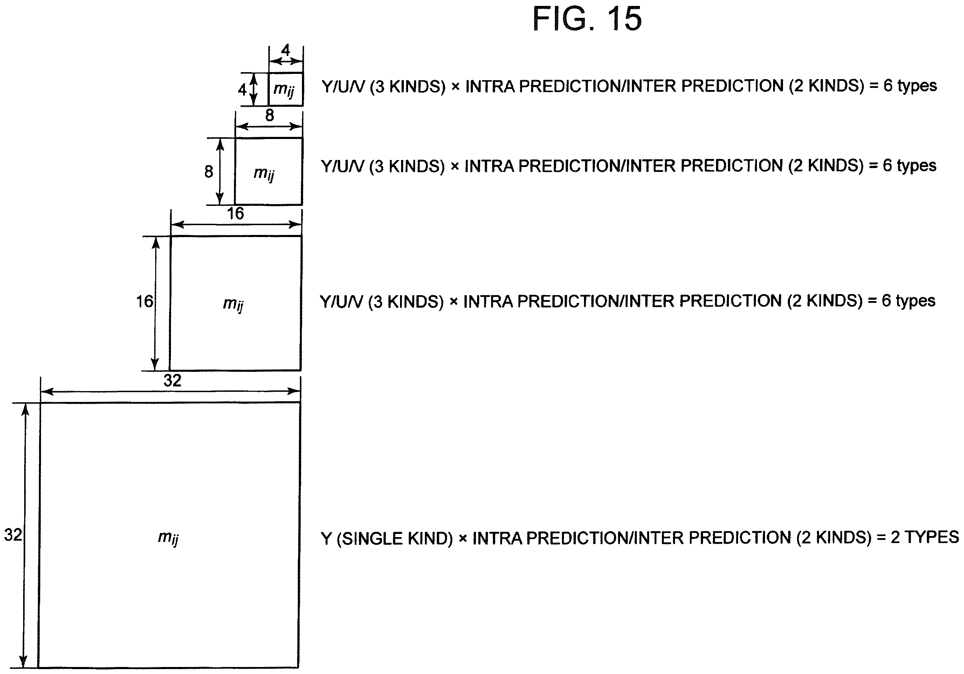

FIG. 15 is an explanatory diagram for describing the number of patterns of the weighting coefficient ($m_{ij}$). As shown in FIG. 15, when the TU size is 4 × 4, 8 × 8, or 16 × 16, there are a total of six kinds of weighting coefficients ($m_{ij}$) according to the color components (three kinds) and the distinction of intra prediction/inter prediction (i.e., two kinds) for each TU size. Since the TU size of 32 × 32 is used only for the luminance component Y, there are a total of two kinds of weighting coefficients ($m_{ij}$) according to the distinction of intra prediction/inter prediction (i.e., two kinds).

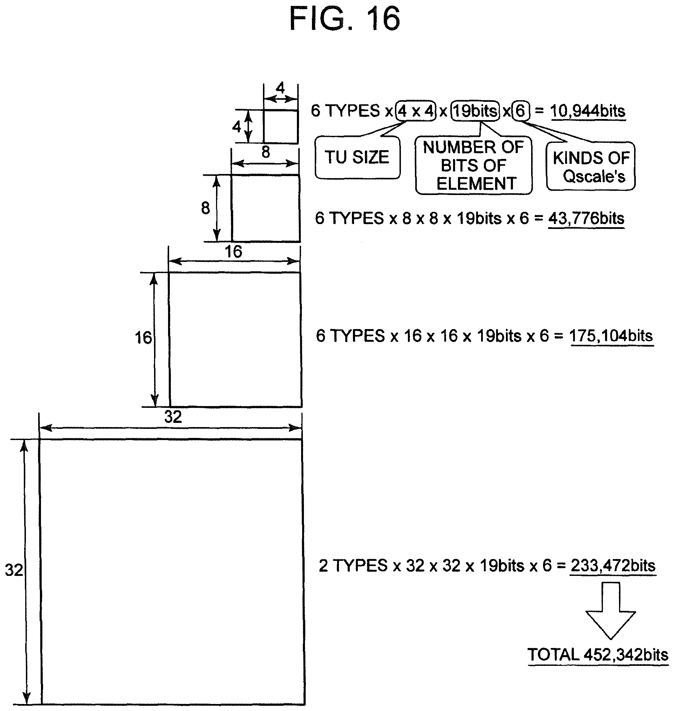

Further, since any of six kinds of values is used as Qscale, when each element of the weighting coefficient ($m_{ij}$) is represented by 19 bits, if a division part in (1) (Equation (3) mentioned below) is tabulated, the entire table size will be 452,342 bits as shown in FIG. 16, which is enormous. Note that a value calculated using Equation (3) is referred to as a quantization multiplier below.

[Math. 3]

$$\frac{Qscale\,(Qp\%6)}{m_{ij}} \qquad (3)$$

It is an object of the present invention is to reduce the volume of a data table when a quantization coefficient is obtained using the data table.

A video encoding device according to the present invention is a video encoding device including quantizing means for executing a quantization process of generating a quantization coefficient of a transform coefficient as a frequency-transformed prediction error image, comprising: control means for supplying parameters used in the quantization process to the quantizing means, wherein the quantizing means includes: a two-dimensional table storing result values of calculation which is a part of the quantization process, each of the result values is calculated by using a value based on a quantization parameter and a quantization weighting coefficient used for visual image quality control; and computing means for inputting a result value, that is corresponding to the parameter supplied from the control means, from the two-dimensional table, and generating the quantization coefficient by using the input result value.

A video encoding method according to the present invention is a video encoding method including a quantization process of generating a quantization coefficient of a transform coefficient as a frequency-transformed prediction error image, comprising: inputting a result value corresponding to a parameter actually used in the quantization process, from a two-dimensional table storing result values of calculation which is a part of the quantization process, each of the result values is calculated by using a value based on a quantization parameter and a quantization weighting coefficient used for visual image quality control; and generating the quantization coefficient by using the input result value.

A video encoding program according to the present invention causes a computer to execute: a process of inputting a result value corresponding to a parameter used in a quantization process, from a two-dimensional table storing result values of calculation which is a part of the quantization process of generating a quantization coefficient of a transform coefficient as a frequency-transformed prediction error image, each of the result values is calculated by using a value based on a quantization parameter and a quantization weighting coefficient used for visual image quality control; and a process of generating the quantization coefficient by using the input result value.

According to the present invention, the volume of a data table can be reduced when a quantization coefficient is obtained using the data table.

BRIEF DESCRIPTION OF THE DRAWINGS

[FIG. 1] It depicts a block diagram showing a configuration example of a video encoding device of one exemplary embodiment.
[FIG. 2] It depicts an explanatory diagram for describing input parameters of a quantizer.
[FIG. 3] It depicts a block diagram showing a configuration example of the quantizer.
[FIG. 4] It depicts a flowchart showing operation related to the calculation of a quantization coefficient $q_{ij}$ made by the quantizer for one block.
[FIG. 5] It depicts a block diagram showing a configuration example of an information processing system capable of implementing the functions of a video encoding device.
[FIG. 6] It depicts a block diagram showing a main part of a video encoding device according to the present invention.
[FIG. 7] It depicts an explanatory diagram showing an example of 33 angular intra prediction modes.
[FIG. 8] It depicts an explanatory diagram showing an example of inter-frame prediction.
[FIG. 9] It depicts a block diagram showing the configuration of a typical video encoding device.
[FIG. 10] It depicts an explanatory diagram showing an example of CTU division of a frame t and an example of CU division of CTU 8 in the frame t.
[FIG. 11] It depicts an explanatory diagram showing a quadtree structure corresponding to the example of CU division of CTU 8.
[FIG. 12] It depicts an explanatory diagram showing examples of PU division of a CU.
[FIG. 13] It depicts an explanatory diagram showing examples of TU division of a CU.
[FIG. 14] It depicts an explanatory diagram showing an example of a quantization step coefficient.
[FIG. 15] It depicts an explanatory diagram for describing the number of patterns of a weighting coefficient ($m_{ij}$).
[FIG. 16] It depicts an explanatory diagram for describing the number of tables.

DESCRIPTION OF THE PREFERRED EMBODIMENT

An exemplary embodiment of the present invention will be described below with reference to the accompanying drawings.

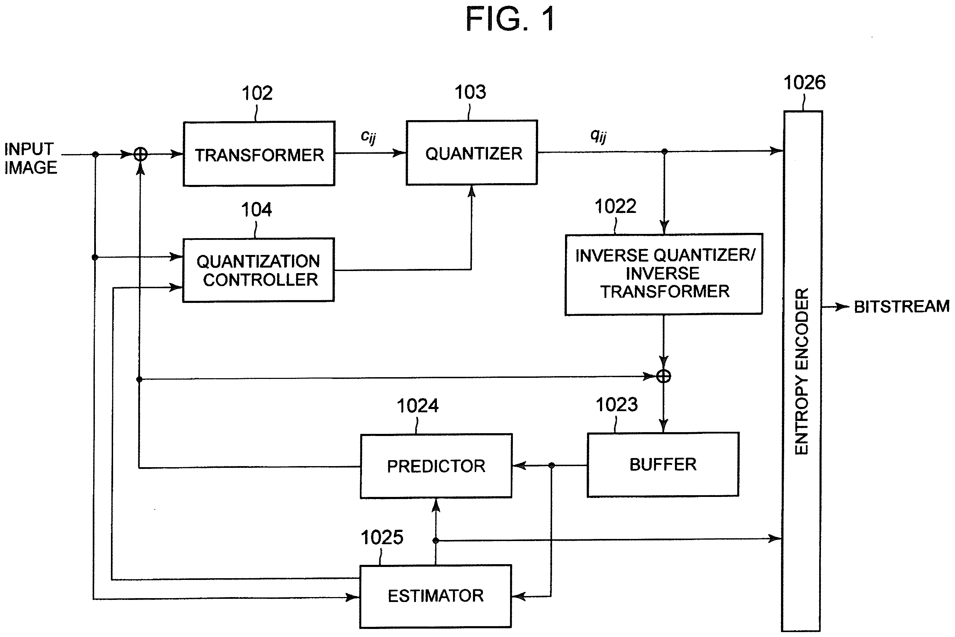

FIG. 1 is a block diagram showing a configuration example of a video encoding device of one exemplary embodiment. The video encoding device shown in FIG. 1 executes an encoding process based on the H.265/HEVC standard. Note that the exemplary embodiment can also be applied to an encoding process in any other standard (system) including a quantization process for a predetermined coefficient.

The video encoding device includes a transformer 102, a quantizer 103, a quantization controller 104, an entropy encoder 1026, an inverse quantizer/inverse transformer 1022, a buffer 1023, a predictor 1024, and an estimator 1025.

The functions of the entropy encoder 1026, the inverse quantizer/inverse transformer 1022, the buffer 1023, the predictor 1024, and the estimator 1025 are the same as those functions shown in FIG. 9.

Based on a TU partitioning shape determined by the estimator 1025, the transformer 102 frequency-transforms a prediction error image obtained by subtracting a prediction signal from an input image signal to generate a transform coefficient $c_{ij}$. The quantizer 103 generates a quantization coefficient $q_{ij}$ of the transform coefficient $c_{ij}$. The quantization

controller 104 supplies parameters such as a quantization parameter Qp to the quantizer 103.

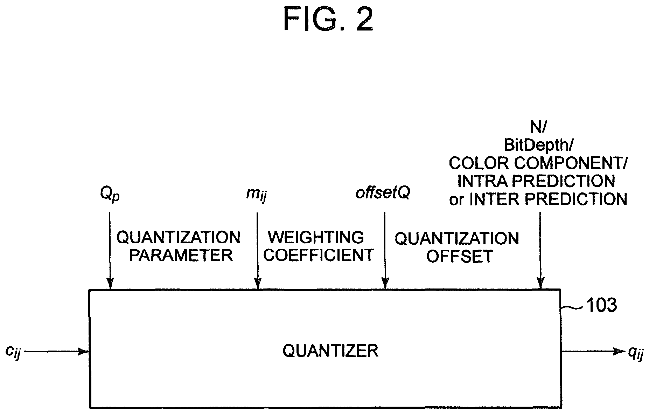

Specifically, as shown in FIG. 2, the quantizer 103 receives, from the quantization controller 104, input of the quantization parameter Qp, the weighting coefficient ($m_{ij}$), the quantization offset offsetQ, the block size (TU size) N, the pixel bit depth BitDepth, the color components, and data indicating whether it is inter prediction or inter prediction. Then, the quantizer 103 calculates the quantization coefficient $q_{ij}$ from the transform coefficient $c_{ij}$ based on the data input from the quantization controller 104.

The quantization controller 104 acquires parameters from the estimator 1025. The quantization controller 104 may be incorporated in the estimator 1025.

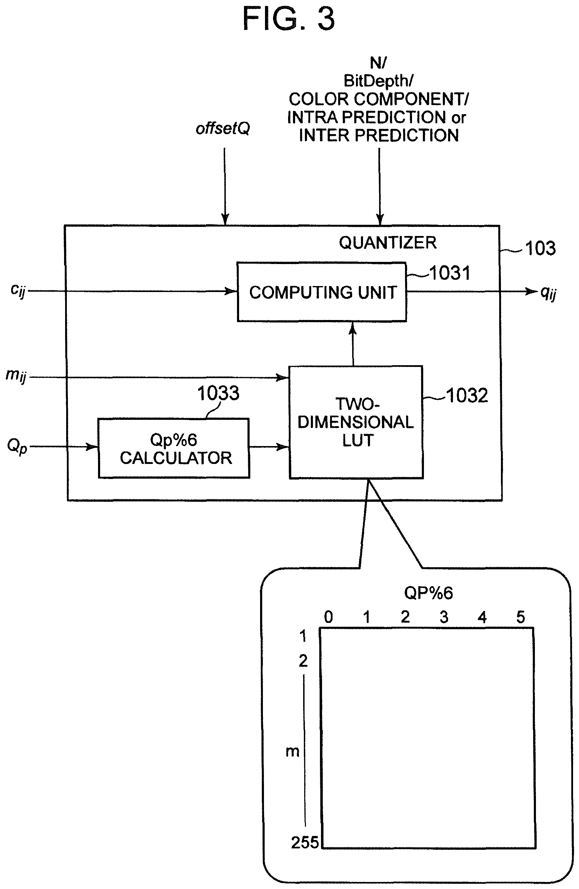

FIG. 3 is a block diagram showing a configuration example of the quantizer 103. In the example shown in FIG. 3, the quantizer 103 includes a computing unit 1031, a two-dimensional look-up table (two-dimensional LUT) 1032, and a Qp%6 calculator 1033.

As shown in FIG. 3, the two-dimensional LUT 1032 is realized by a ROM (Read Only Memory) in which a quantization multiplier (see Equation (3) mentioned above) corresponding to a value (1-255) that the element m of the weighting coefficient ($m_{ij}$) can take and each of values (0 to 5) of Qp%6 is set.

The Qp%6 calculator 1033 divides the quantization parameter Qp by 6 and sets the remainder as Qp%6.

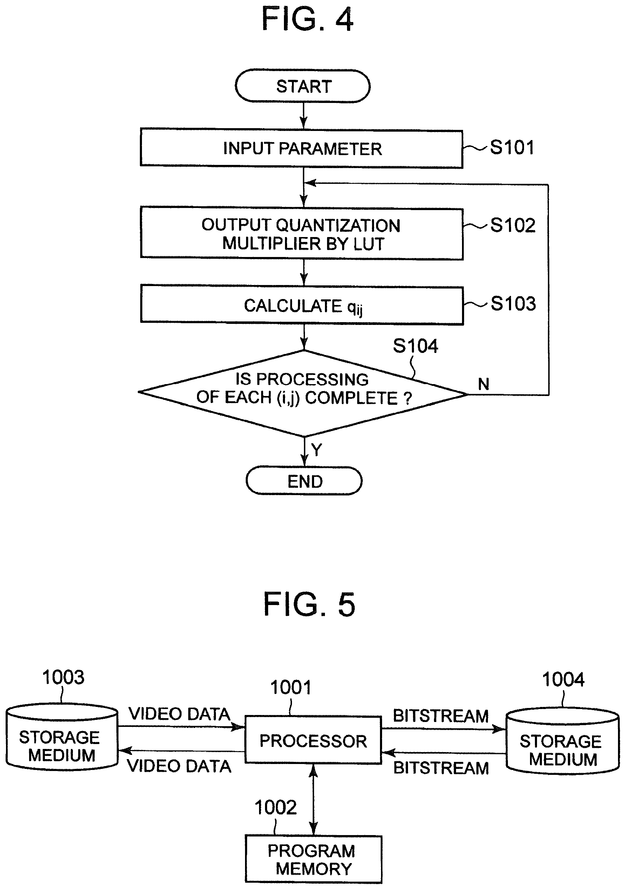

FIG. 4 is a flowchart showing operation related to the calculation of the quantization coefficient $q_{ij}$ made by the quantizer 103 for one block. As shown in FIG. 4, the quantizer 103 receives input of parameters from the quantization controller 104 in step S101. The parameters include the quantization parameter Qp, the weighting coefficient ($m_{ij}$), the quantization offset offsetQ, the TU size N, the pixel bit depth BitDepth, the color components, and data indicating whether it is inter prediction or inter prediction. Note that (i,j) denotes a pixel position in the block. Further, the computing unit 1031 temporarily stores the input parameters.

Next, in step S102, the two-dimensional LUT 1032 outputs a quantization multiplier corresponding to the element m of the weighting coefficient ($m_{ij}$) included in the input parameters and the quantization parameter Qp (specifically, Qp%6) included in the input parameters. Then, in step S103, the computing unit 1031 calculates the quantization coefficient $q_{ij}$ based on the following Equation (4).

$$([\text{quantization multiplier}] \times |c_{ij}| + f \cdot q_{\text{step}})/q_{\text{step}} \qquad (4)$$

When processing steps S102 and S103 are executed on all (i,j), the calculation process of the quantization coefficient $q_{ij}$ is completed (step S104). When there is any unprocessed (i,j), the computing unit 1031 and the two-dimensional LUT 1032 execute processing steps S102 and S103 on the next (i,j).

As described above, the quantizer 103 calculates the quantization coefficient $q_{ij}$ using the LUT.

In the exemplary embodiment, a process of dividing the quantization step coefficient by the weighting coefficient ($m_{ij}$) is not executed in calculating the quantization coefficient $q_{ij}$ of the transform coefficient $c_{ij}$. Thus, the amount of computation in determining the quantization coefficient $q_{ij}$ can be reduced.

As will be described below, the LUT size can also be reduced.

When each LUT element is represented in 19 bits, the size of the two-dimensional LUT 1032 is 255 × 6 × 19 = 29,070 bits.

When the table is divided by Qp%6, the size of the table is 452,342 bits (see FIG. 16). In other words, the size of the two-dimensional LUT 1032 is reduced in the exemplary embodiment.

The reason for reducing the size of the two-dimensional LUT 1032 in the exemplary embodiment is as follows, namely: The value (1-255) of the element m of the weighting coefficient ($m_{ij}$) is common even when the color components or the TU size is different and regardless of whether it is intra prediction or inter prediction. Therefore, values of quantization multipliers according to various color components, the distinction of intra prediction/inter prediction, and various TU sizes can be obtained by preparing only one table in which the value of a quantization multiplier according to the value (1-255) of the element m is set for each Qp%6, i.e., by preparing only one two-dimensional LUT. In other words, there is no need to provide a table for each Qp%6.

The video encoding device of the aforementioned exemplary embodiment may be realized by hardware or a computer program.

An information processing system depicted in Fig. 5 includes a processor 1001, a program memory 1002, a storage medium 1003 for storing video data, and a storage medium 1004 for storing a bitstream. The storage medium 1003 and the storage medium 1004 may be separate storage media, or storage areas included in the same storage medium. A magnetic storage medium such as a hard disk is available as a storage medium.

In the information processing system depicted in Fig. 5, a program for realizing the functions of the blocks (except the buffer block) depicted in Fig. 1 of the exemplary embodiments is stored in the program memory 1002. The processor 1001 realizes the function of the video encoding device described in the foregoing exemplary embodiment, by executing processes according to the program stored in the program memory 1002.

In regard to the quantizer 103, the function of the computing unit 1031 shown in FIG. 2 can be realized by the processor 1001 that performs processing according to the program.

FIG. 6 is a block diagram showing a main part of a video encoding device according to the present invention. As shown in FIG. 6, the video encoding device includes quantizing means (quantizing section, which is for example realized by the quantizer 103) 11, and control means (control section, which is for example realized by the quantization controller 104) 12 for supplying parameters used in the quantization process to the quantizing means 11. The quantizing means 11 includes a two-dimensional table (e.g., the two-dimensional LUT 1032) 13 storing result values (e.g., quantization multipliers) of calculation which is a part of the quantization process, each of the result values is calculated by using a value based on a quantization parameter and a quantization weighting coefficient (e.g., the quantization parameter Qp (specifically, Qp%6) and the weighting coefficient matrix $m_{ij}$) used for visual image quality control, and computing means (computing section, which is for example realized by the computing unit 1031 of the quantizer 103) 14 for inputting a result value, that is corresponding to the parameter supplied from the control means 12, from the two-dimensional table, and generating the quantization coefficient by using the input result value.

In the aforementioned exemplary embodiment, the quantization weighting coefficient has a common value (e.g., each value in the common range of 1 to 255) even when the color components and the block size are different.

While the present invention has been described with reference to the exemplary embodiments and examples, the present invention is not limited to the aforementioned exemplary embodiments and examples. Various changes understandable to those skilled in the art within the scope of the present invention can be made to the structures and details of the present invention.

This application claims priority based on Japanese Patent Application No. 2014-055841 filed on March 19, 2014, the disclosures of which are incorporated herein in their entirety.

Reference Signs List

| | |
|---|---|
| 11 | quantizing means (quantizing section) |
| 12 | control means (control section) |
| 13 | two-dimensional table |
| 14 | computing means (computing section) |
| 102 | transformer |
| 103 | quantizer |
| 104 | quantization controller |
| 1021 | transformer/quantizer |
| 1022 | inverse quantizer/inverse transformer |
| 1023 | buffer |
| 1024 | predictor |
| 1025 | estimator |
| 1026 | entropy encoder |
| 1031 | computing unit |
| 1032 | two-dimensional look-up table (two-dimensional LUT) |
| 1033 | Qp%6 calculator |

**Claims**

1. A video encoding device including quantizing means for executing a quantization process of generating a quantization coefficient of a transform coefficient as a frequency-transformed prediction error image, comprising:

   control means for supplying parameters used in the quantization process to the quantizing means,
   wherein the quantizing means includes:

   a two-dimensional table storing result values of calculation which is a part of the quantization process, each of the result values is calculated by using a value based on a quantization parameter and a quantization weighting coefficient used for visual image quality control; and
   computing means for inputting a result value, that is corresponding to the parameter supplied from the control means, from the two-dimensional table, and generating the quantization coefficient by using the input result value.

2. The video encoding device according to claim 1, wherein the calculation which is a part of the quantization process is a division using the value based on the quantization parameter and the quantization weighting coefficient.

3. The video encoding device according to claim 1 or claim 2, wherein the quantizing means executes the quantization process on the basis of an H.265/HEVC standard.

4. A video encoding method including a quantization process of generating a quantization coefficient of a transform coefficient as a frequency-transformed prediction error image, comprising:

inputting a result value corresponding to a parameter actually used in the quantization process, from a two-dimensional table storing result values of calculation which is a part of the quantization process, each of the result values is calculated by using a value based on a quantization parameter and a quantization weighting coefficient used for visual image quality control; and
generating the quantization coefficient by using the input result value.

5. The video encoding method according to claim 4, wherein the calculation which is a part of the quantization process is a division using the value based on the quantization parameter and the quantization weighting coefficient.

6. The video encoding method according to claim 4 or claim 5, wherein the quantization process is executed on the basis of an H.265/HEVC standard.

7. A video encoding program for causing a computer to execute:

a process of inputting a result value corresponding to a parameter used in a quantization process, from a two-dimensional table storing result values of calculation which is a part of the quantization process of generating a quantization coefficient of a transform coefficient as a frequency-transformed prediction error image, each of the result values is calculated by using a value based on a quantization parameter and a quantization weighting coefficient used for visual image quality control; and
a process of generating the quantization coefficient by using the input result value.

8. The video encoding program according to claim 7, wherein the quantization process is executed on the basis of an H.265/HEVC standard.

FIG. 1

EP 3 122 049 A1

# FIG. 2

$$N/$$
BitDepth/
COLOR COMPONENT/
INTRA PREDICTION
or INTER PREDICTION

$Q_p$       $m_{ij}$       offsetQ

QUANTIZATION    WEIGHTING    QUANTIZATION
PARAMETER      COEFFICIENT     OFFSET

$c_{ij}$ → | QUANTIZER | → $q_{ij}$    ~103

# FIG. 3

N/
BitDepth/
COLOR COMPONENT/
INTRA PREDICTION or
INTER PREDICTION

*offsetQ*

QUANTIZER    ~103

COMPUTING UNIT    ~1031

$c_{ij}$    →    →    $q_{ij}$

$m_{ij}$    →

1033

TWO-
DIMENSIONAL
LUT    ~1032

$Q_p$    →    Qp%6
CALCULATOR    →

QP%6

| | 0 | 1 | 2 | 3 | 4 | 5 |
|---|---|---|---|---|---|---|
| 1 | | | | | | |
| 2 | | | | | | |
| m | | | | | | |
| 255 | | | | | | |

# FIG. 4

```
         ( START )
             │
             ▼
┌─────────────────────────────┐
│      INPUT PARAMETER        │──── S101
└─────────────────────────────┘
             │
             ▼ ◄──────────────────────┐
┌─────────────────────────────┐       │
│    OUTPUT QUANTIZATION      │──── S102│
│      MULTIPLIER BY LUT      │       │
└─────────────────────────────┘       │
             │                        │
             ▼                        │
┌─────────────────────────────┐       │
│       CALCULATE $q_{ij}$    │──── S103│
└─────────────────────────────┘       │
             │          S104          │
             ▼                        │
         ╱─────────╲                  │
        ╱  IS PROCESSING ╲     N       │
       ⟨ OF EACH (i,j) COMPLETE ? ⟩────┘
        ╲               ╱
         ╲─────────────╱
             │ Y
             ▼
          (  END  )
```

# FIG. 5

```
  1003                    1001                      1004
┌──────────┐  VIDEO DATA  ┌──────────┐  BITSTREAM  ┌──────────┐
│ STORAGE  │─────────────►│PROCESSOR │────────────►│ STORAGE  │
│ MEDIUM   │◄─────────────│          │◄────────────│ MEDIUM   │
└──────────┘  VIDEO DATA  └──────────┘  BITSTREAM  └──────────┘
                              ▲
                   1002       │
                          ┌───┴──────┐
                          │ PROGRAM  │
                          │ MEMORY   │
                          └──────────┘
```

# FIG. 6

CONTROL MEANS (CONTROL SECTION) ~12

QUANTIZING MEANS (QUANTIZING SECTION) ~11

COMPUTING MEANS
(COMPUTING SECTION) ~14

TWO-DIMENSIONAL TABLE ~13

# FIG. 7

# FIG. 8

INTER-FRAME PREDICTION BLOCK

MV=(mv$_x$,mv$_y$)

mv$_y$

mv$_x$

BLOCK TO BE ENCODED

(REFERENCE PICTURE)

(PICTURE TO BE ENCODED)

t-1                                    t            TIME

EP 3 122 049 A1

# FIG. 9

INPUT IMAGE

1021 TRANSFORMER/QUANTIZER

1022 INVERSE QUANTIZER/INVERSE TRANSFORMER

1023 BUFFER

1024 PREDICTOR

1025 ESTIMATOR

1026 ENTROPY ENCODER

BITSTREAM

# FIG. 10

# FIG. 11

# FIG. 12

# FIG. 13

# FIG. 14

| Qp%6 | 0 | 1 | 2 | 3 | 4 | 5 |
|------|-----|-----|-----|-----|-----|-----|
| Qscale(Qp%6) | 26214 | 23302 | 20560 | 19306 | 16384 | 14564 |

(A)

| Qp%6 | 0 | 1 | 2 | 3 | 4 | 5 |
|------|-----|-----|-----|-----|-----|-----|
| InvQscale(Qp%6) | 40 | 45 | 51 | 57 | 64 | 72 |

(B)

# FIG. 15

Y/U/V (3 KINDS) × INTRA PREDICTION/INTER PREDICTION (2 KINDS) = 6 types

Y/U/V (3 KINDS) × INTRA PREDICTION/INTER PREDICTION (2 KINDS) = 6 types

Y/U/V (3 KINDS) × INTRA PREDICTION/INTER PREDICTION (2 KINDS) = 6 types

Y (SINGLE KIND) × INTRA PREDICTION/INTER PREDICTION (2 KINDS) = 2 TYPES

EP 3 122 049 A1

# FIG. 16

6 TYPES x 4 x 4 x 19bits x 6 = 10,944bits

TU SIZE

NUMBER OF BITS OF ELEMENT

KINDS OF Qscale's

6 TYPES x 8 x 8 x 19bits x 6 = 43,776bits

6 TYPES x 16 x 16 x 19bits x 6 = 175,104bits

2 TYPES x 32 x 32 x 19bits x 6 = 233,472bits

TOTAL 452,342bits

## INTERNATIONAL SEARCH REPORT

| International application No. |
| --- |
| PCT/JP2015/000487 |

A. CLASSIFICATION OF SUBJECT MATTER
*H04N19/426*(2014.01)i, *H04N19/126*(2014.01)i, *H04N19/196*(2014.01)i

According to International Patent Classification (IPC) or to both national classification and IPC

B. FIELDS SEARCHED

Minimum documentation searched (classification system followed by classification symbols)
H04N19/00-19/98

Documentation searched other than minimum documentation to the extent that such documents are included in the fields searched
Jitsuyo Shinan Koho            1922-1996   Jitsuyo Shinan Toroku Koho   1996-2015
Kokai Jitsuyo Shinan Koho   1971-2015   Toroku Jitsuyo Shinan Koho   1994-2015

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y | Tokumichi MURAKAMI, Kotaro ASAI, Shun'ichi SEKIGUCHI, 'Kokoritsu Eizo Fugoka Gijutsu HEVC/H. 265 to sono Oyo', Ohmsha, Ltd., Issued date 25 February 2013 (25.02.2013), 1st edition, pages 142 to 144 | 1-8 |
| Y | JP 64-23333 A  (Fujitsu Ltd.), 26 January 1989 (26.01.1989), fig. 15 (Family: none) | 1-8 |
| A | JP 2006-516835 A  (NTT Docomo Inc.), 06 July 2006 (06.07.2006), entire text; all drawings & US 2004/0151253 A1    & WO 2004/029880 A1 & KR 10-2005-0065548 A   & CN 1685369 A | 1-8 |

☒  Further documents are listed in the continuation of Box C.        ☐   See patent family annex.

| * | Special categories of cited documents: |
| --- | --- |
| "A" | document defining the general state of the art which is not considered    to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| 06 April 2015 (06.04.15) | 21 April 2015 (21.04.15) |

| Name and mailing address of the ISA/ | Authorized officer |
| --- | --- |
| Japan Patent Office 3-4-3,Kasumigaseki,Chiyoda-ku, Tokyo 100-8915,Japan | Telephone No. |

Form PCT/ISA/210 (second sheet) (July 2009)

**INTERNATIONAL SEARCH REPORT**

International application No.

PCT/JP2015/000487

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2007-507183 A  (Texas Instruments Inc.), 22 March 2007 (22.03.2007), entire text; all drawings & WO 2005/032117 A2      & KR 10-2006-0135613 A & CN 1856997 A | 1-8 |
| A | JP 7-202711 A  (Oki Electric Industry Co., Ltd.), 04 August 1995 (04.08.1995), entire text; all drawings & US 5635938 A          & EP 663762 A2 | 1-8 |

Form PCT/ISA/210 (continuation of second sheet) (July 2009)

**EP 3 122 049 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011109711 A
- JP 2013150327 A
- JP 2014055841 A